# EUROPÄISCHE PATENTANMELDUNG

(11) **EP 2 031 196 A2**
(43) Veröffentlichungstag der Anmeldung: **04.03.2009**
(21) Anmeldenummer: 08014401.7
(22) Anmeldetag: 13.08.2008
(51) Int. Cl.: F01L 1/34

(54) **Brennkraftmaschine**

(30) Priorität: 29.08.2007 DE 102007040697
(71) Anmelder: VOLKSWAGEN AG, 38436 Wolfsburg (DE)
(72) Erfinder: Scher, Uwe, 38162 Cremlingen (DE)

(57) **Zusammenfassung**

Die Erfindung betrifft eine Brennkraftmaschine, wobei jedem Arbeitszylinder ein erstes und ein zweites Einlassventil sowie ein erstes und ein zweites Auslassventil zugeordnet ist, wobei eine erste Nockenwelle (10) sowohl wenigstens ein Einlassventil als auch wenigstens ein Auslassventil betätigt, wobei an der ersten Nockenwelle (10) ein erster Nockenwellenversteller (12) angeordnet ist, welcher Ventilsteuerzeiten der dieser ersten Nockenwelle (12) zugeordneten Ein- und Auslassventile wahlweise nach früh oder spät verstellt. Hierbei ist die erste Nockenwelle (10) derart angeordnet und ausgebildet, dass diese von jedem Arbeitszylinder das erste Einlassventil und das erstes Auslassventil betätigt, wobei eine zweite Nockenwelle (14) vorgesehen ist, welche von jedem Arbeitszylinder das zweite Einlassventil und das zweite Auslassventil betätigt, wobei an der zweiten Nockenwelle (14) ein zweiter Nockenwellenversteller (16) angeordnet ist, weicher Ventilsteuerzeiten der dieser zweiten Nockenwelle zugeordneten Ein- und Auslassventile wahlweise nach früh oder spät verstellt.

## Beschreibung

Die Erfindung betrifft eine Brennkraftmaschine, insbesondere Dieselmotor, insbesondere eines Kraftfahrzeugs, mit wenigstens einem Arbeitszylinder, wobei jedem Arbeitszylinder ein erstes und ein zweites Einlassventil sowie ein erstes und ein zweites Auslassventil zugeordnet ist, wobei wenigstens zwei Nockenwellen vorgesehen sind, von denen eine erste Nockenwellen sowohl wenigstens ein Einlassventil als auch wenigstens ein Auslassventil betätigt, wobei an der ersten Nockenwelle ein erster Nockenwellenversteller angeordnet ist, welcher Ventilsteuerzeiten der dieser ersten Nockenwelle zugeordneten Ein- und Auslassventile wahlweise nach früh oder spät verstellt, gemäß dem Oberbegriff des Patentanspruchs 1.

Aus der EP 0 947 672 A2 ist eine variable Ventilsteuerung für eine Hubkolben-Brennkraftmaschine bekannt. Hierbei ist eine Nockenwelle vorgesehen, die sowohl Einlassventile als auch Auslassventile betätigt.

Der Erfindung liegt die Aufgabe zugrunde, eine variablen Ventiltrieb einer Brennkraftmaschine, insbesondere eines Dieselmotors, zu verbessern.

Diese Aufgabe wird erfindungsgemäß durch eine Brennkraftmaschine der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass die erste Nockenwelle derart angeordnet und ausgebildet ist, dass diese von jedem Arbeitszylinder das erste Einlassventil und das erstes Auslassventil betätigt, wobei eine zweite Nockenwelle vorgesehen ist, welche von jedem Arbeitszylinder das zweite Einlassventil und das zweite Auslassventil betätigt, wobei an der zweiten Nockenwelle ein zweiter Nockenwellenversteller angeordnet ist, welcher Ventilsteuerzeiten der dieser zweiten Nockenwelle zugeordneten Ein- und Auslassventile wahlweise nach früh oder spät verstellt.

Dies hat den Vorteil, dass mit nur einem zusätzlichen Nockenwellenversteller die Ventilsteuerzeiten beim Ladungswechsel für jeden Arbeitszylinder sowohl für den Einlass als auch für den Auslass über einen weiten Bereich variiert werden können. Hierdurch ist sowohl die Größe der ventilüberschneidung als auch die Lage einer mittleren Überschneidung zwischen früh und spät einstellbar. Dadurch ist es möglich, die Abgaszusammensetzung derart zu gestalten, dass auf einen teuren SCR-Katalysator (selektive, katalytische Reduktion von Stickoxiden) verzichtet werden kann.

Eine direkte Beeinflussung der inneren Abgasrückführung mit wahlweise hohem Anteil an innerer Abgasrückführung erzielt man dadurch, dass bei einer Stellung der Nockenwellenversteller in eine mittigen Stellung zwischen den maximalen Endstellungen von früh und spät eine negative Ventilüberschneidung mehr als 40°KW beträgt.

Der erste und/oder zweite Nockenwellenversteller ist beispielsweise derart ausgebildet, dass dieser einen Verstellbereich für die Ventilsteuerzeiten von +/-20°KW aufweist.

Die Erfindung wird im Folgenden anhand der Zeichnung näher erläutert. Diese zeigt in
- Fig. 1: eine schematische Darstellung einer erfindungsgemäßen Brennkraftmaschine,
- Fig. 2: eine graphische Darstellung der Steuerzeiten für Einlass- und Auslassventile eines Arbeitszylinders,
- Fig. 3: eine graphische Darstellung der Steuerzeiten für Einlass- und Auslassventile eines Arbeitszylinders, wobei die erste Nockenwelle nach früh und die zweite Nockenwelle nach früh verstellt ist,
- Fig. 4: eine graphische Darstellung der Steuerzeiten für Einlass- und Auslassventile eines Arbeitszylinders, wobei die erste Nockenwelle zentriert und die zweite Nockenwelle nach früh verstellt ist,
- Fig. 5: eine graphische Darstellung der Steuerzeiten für Einlass- und Auslassventile eines Arbeitszylinders, wobei die erste Nockenwelle nach spät und die zweite Nockenwelle nach früh verstellt ist,
- Fig. 6: eine graphische Darstellung der Steuerzeiten für Einlass- und Auslassventile eines Arbeitszylinders, wobei die erste Nockenwelle nach früh verstellt und die zweite Nockenwelle zentriert ist,
- Fig. 7: eine graphische Darstellung der Steuerzeiten für Einlass- und Auslassventile eines Arbeitszylinders, wobei die erste Nockenwelle zentriert und die zweite Nockenwelle zentriert ist,
- Fig. 8: eine graphische Darstellung der Steuerzeiten für Einlass- und Auslassventile eines Arbeitszylinders, wobel die erste Nockenwelle nach spät verstellt und die zweite Nockenwelle zentriert ist,
- Fig. 9: eine graphische Darstellung der Steuerzeiten für Einlass- und Auslassventile eines Arbeitszylinders, wobei die erste Nockenwellen nach früh und die zweite Nockenwelle nach spät verstellt ist,
- Fig. 10: eine graphische Darstellung der Steuerzeiten für Einlass- und Auslassventile eines Arbeitszylinders, wobei die erste Nockenwelle zentriert und die zweite Nockenwelle nach früh verstellt ist, und
- Fig. 11: eine graphische Darstellung der Steuerzeiten für Einlass- und Auslassventile eines Arbeitszylinders, wobei die erste Nockenwelle nach spät und die zweite Nockenwelle nach spät verstellt ist.

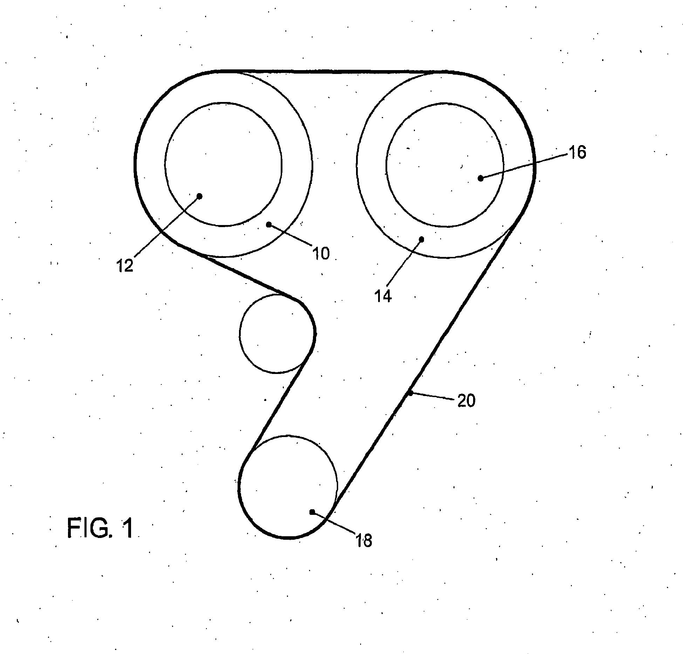

Die in Fig. 1 lediglich schematisch dargestellte, bevorzugte Ausführungsform einer erfindungsgemäßen Brennkraftmaschine mit nicht dargestellten Arbeitszylindern, von denen jeder jeweils ein erstes und zweites Einlassventil (nicht dargestellt) sowie ein erstes und zweites Auslassventil (nicht dargestellt) aufweist, umfasst eine erste Nockenwelle 10 mit einem ersten Nockenwellenversteller 12 und eine zweite Nockenwelle 14 mit einem zweiten Nockenwellenversteller 16. Die erste Nockenwelle 10 betätigt das erste Einlassventil und das erste Auslassventil eines jeden Arbeitszylinders und die zweite Nockenwelle 14 betätigt das zweite Einlassventil und das zweite Auslassventil eines jeden Arbeitszylinders. Die Nockenwellen 10, 14 werden von einer Kurbelwelle 18 über einen Zahnriemen oder eine Kette 20 angetrieben. Die beiden Nockenwellenversteller 12, 16 sind derart angeordnet und ausgebildet, dass diese jeweils eine Nockenwelle unabhängig von der anderen Nockenwelle aus einer zentrierten Stellung wahlweise nach früh oder spät verstellen.

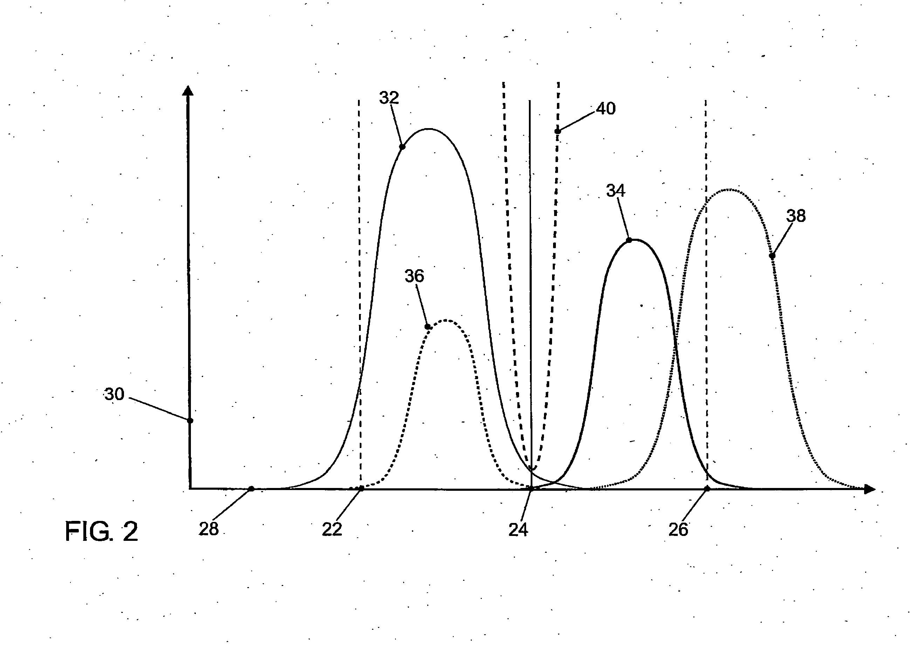

Fig. 2 veranschaulicht die Steuerzeiten für erstes und zweites Einlassventil sowie erstes und zweites Auslassventil eines Arbeitszylinders durch die erste und zweite Nockenwelle 10, 14. Hierbei ist auf einer horizontalen Achse 28 ein Kurbelwinkel und auf einer vertikalen Achse 30 ein Hub aufgetragen. Bei 22 erreicht ein in dem Arbeitszylinder oszillierender Kolben einen unteren Totpunkt UT nach einem Arbeitshub und vor einem Ladungswechselhub, bei 24 erreicht der Kolben einen oberen Totpunkt OT im Ladungswechselhub und bei 26 erreicht der Kolben einen unteren Totpunkt UT nach einem Ladungswechselhub und vor einem Kompressionshub.

Ein erster Graph 32 veranschaulicht den Hub des ersten Auslassventils über den Kurbelwinkel, ein zweiter Graph 34 veranschaulicht den Hub des ersten Einlassventils über den Kurbelwinkel, ein dritter Graph 36 veranschaulicht den Hub des zweiten Auslassventils über den Kurbelwinkel und ein vierter Graph 38 veranschaulicht den Hub des zweiten Einlassventils über den Kurbelwinkel. Die Graphen 32 und 34 für das erste Auslassventil und erste Einlassventil sind von der ersten Kurbelwelle 1.0 bestimmt und die Graphen 36 und 38 für das zweite Auslassventil und zweite Einlassventil sind von der zweiten Kurbelwelle 14 bestimmt. Ein fünfter Graph 40 veranschaulicht den Hub des Kolbens.

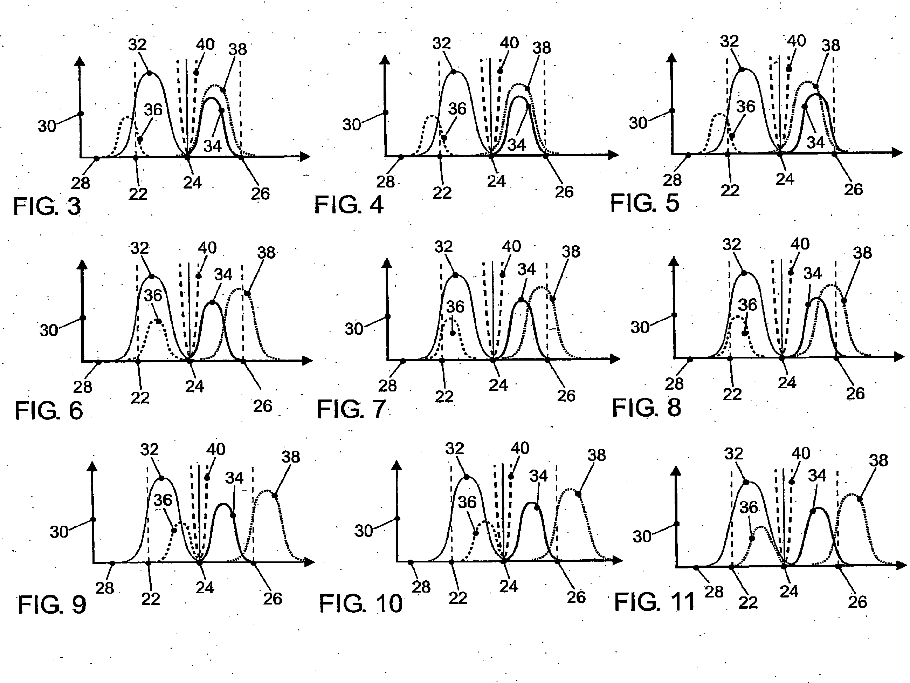

Die Fig. 3 bis 11 zeigen die Steuerzeiten für die Gaswechselventile eines Arbeitskolbens für neun verschiedene Stellungen der Nockenwellenversteller. In Fig. 3 sind der erste und zweite Nockenwellenversteller 12, 16 nach früh verstellt. Es ergibt sich eine mittlere Ventilüberschneidung vor OT 24. In Fig. 4 ist der erste Nockenwellenversteller 12 der ersten Nockenwelle 10 zentriert und der zweite Nockenwellenversteller 16 der zweiten Nockenwelle 14 nach früh verstellt. Es ergibt sich eine kleine Ventilüberschneidung im Bereich des OT 24. In Fig. 5 ist der erste Nockenwellenversteller 12 der ersten Nockenwelle 10 nach spät und der zweite Nockenwellenversteller 16 der zweiten Nockenwelle 14 nach früh verstellt. Es ergibt sich eine minimale Ventilüberschneidung. In Fig. 6 ist der erste Nockenwellenversteller 12 der ersten Nockenwelle 10 nach früh verstellt und der zweite Nockenwellenversteller 16 der zweiten Nockenwelle 14 zentriert. Es ergibt sich eine mittlere Ventilüberschneidung vor OT 24. In Fig. 7 sind der erste und zweite Nockenwellenversteller 12, 16 zentriert. Es ergibt sich eine maximale Ventilüberschneidung. In Fig. 8 ist der erste Nockenwellenversteller 12 der ersten Nockenwelle 10 nach spät verstellt und der zweite Nockenwellenversteller 16 der zweiten Nockenwelle 14 zentriert. Es ergibt sich eine mittlere Ventilüberschneidung im Bereich von OT 24. In Fig. 9 ist der erste Nockenwellenversteller 12 der ersten Nockenwelle 10 nach früh und der zweite Nockenwellenversteller 16 der zweiten Nockenwelle 14 nach spät verstellt. Es ergibt sich eine minimale Ventilüberschneidung.
In Fig. 10 ist der erste Nockenwellenversteller 12 der ersten Nockenwelle 10 zentriert und der zweite Nockenwellenversteller 16 der zweiten Nockenwelle 14 nach spät verstellt. Es ergibt sich eine kleine Ventilüberschneidung im Bereich des OT 24. In Fig. 11 sind der erste und zweite Nockenwellenversteller 12, 16 nach spät verstellt. Es ergibt sich eine mittlere Ventilüberschneidung im Bereich von OT 24.

Ergänzend ist optional eine Neupositionierung des Schließzeitpunktes des ersten Auslassventiles um ca. 20°KW nach früh bei gleichzeitiger Neupositionierung des Öffnungszeitpunktes des ersten Einlassventiles um 20°KW nach spät vorgesehen. Hierdurch kann ein bis zu 40°KW größerer Bereich negativer Ventilüberschneidung, je nach Stellung der zwei Nockenwellerwersteller, hinzu gewonnen werden. Hiermit wird eine direkte Beeinflussung der inneren Abgasrückführung (EGR) ermöglicht.

Mit der erfindungsgemäßen Anordnung ist sowohl die Größe der Ventilüberschneidung zwischen minimal und maximal als auch die Lage einer mittleren Überschneidung zwischen früh und spät einstellbar. Im Ergebnis ist es möglich, die Zusammensetzung des Abgases derart zu gestalten, dass auf einen teuren SCR-Katalysator verzichtet werden kann.

## Patentansprüche

1. Brennkraftmaschine, insbesondere Dieselmotor, insbesondere eines Kraftfahrzeugs, mit wenigstens einem Arbeitszylinder, wobei jedem Arbeitszylinder ein erstes und ein zweites Einlassventil sowie ein erstes und ein zweites Auslassventil zugeordnet ist, wobei wenigstens zwei Nockenwellen (10, 14) vorgesehen sind, von denen eine erste Nockenwelle (10) sowohl wenigstens ein Einlassventil als auch wenigstens ein Auslassventil betätigt, wobei an der ersten Nockenwelle (10) ein erster Nockenwellenversteller (12) angeordnet ist, welcher Ventilsteuerzeiten der dieser ersten Nockenwelle (12) zugeordneten Ein- und Auslassventile wahlweise nach früh oder spät verstellt, **dadurch gekennzeichnet, dass** die erste Nockenwelle (10) derart angeordnet und ausgebildet ist, dass diese von jedem Arbeitszylinder das erste Einlassventil und das erstes Auslassventil betätigt, wobei eine zweite Nockenwelle (14) vorgesehen ist, welche von jedem Arbeitszylinder das zweite Einlassventil und das zweite Auslassventil betätigt, wobei an der zweiten Nockenwelle (14) ein zweiter Nockenwellenversteller (16) angeordnet ist, welcher Ventilsteuerzeiten der dieser zweiten Nockenwelle zugeordneten Ein- und Auslassventile wahlweise nach früh oder spät verstellt.

2. Brennkraftmaschine nach Anspruch 1, **dadurch gekennzeichnet, dass** die erste und zweite Nockenwelle (10, 14) derart ausgebildet sind, dass bei einer Stellung der Nockenwellenversteller (10, 14) in eine mittigen Stellung zwischen.den maximalen Endstellungen von früh und spät eine negative Ventilüberschneidung mehr als 40°KW beträgt.

3. Brennkraftmaschine nach wenigstens einem der vorhergehenden Ansprüche, **dadurch gekennzeichnet, dass** der erste und/oder zweite Nockenwellenversteller (10, 14) derart ausgebildet ist, dass dieser einen Verstellbereich für die Ventilsteuerzeiten von +/-20°KW aufweist.
